# EUROPEAN PATENT APPLICATION

(11) **EP 2 546 954 A1**
(43) Date of publication of application: **16.01.2013**
(21) Application number: 12163561.9
(22) Date of filing: 10.04.2012
(51) Int. Cl.: H02J 9/00, G06F 1/32, H02J 3/14

(54) **Energy savings switch device, and method thereof**

(30) Priority: 12.07.2011 TW 100124553
(71) Applicant: HannStar Display Corp., Wugu Dist. New Taipei City 248 (TW)
(72) Inventor: Lee, Chin-Sheng, 334 Bade City, Taoyuan County (TW); Pai, Yi-Ming, 508 Hemei Township, Changhua County (TW); Hsu, Yu-Tsung, 320 Zhongli City, Taoyuan County (TW)
(74) Representative: Jansen, Cornelis Marinus

(57) **Abstract**

An energy saving switch device (100) for an electronic apparatus (150), including: a power control unit (110), determining whether to provide an external power to the electronic apparatus according to an external control signal; a switch unit (120), coupled to the power control unit and the external power (140), and when receiving a power off signal, electrically disconnecting the external power from the electronic apparatus; and a detection unit (130), detecting whether a user is inside a predetermined range when the power control unit is not providing the external power to the electronic apparatus, and generating the power off signal when the user is not inside the predetermined range.

## Description

### CROSS REFERENCE TO RELATED APPLICATIONS

This Application claims priority of Taiwan Patent Application No. 100124553, filed on Jul. 12, 2011, the entirety of which is incorporated by reference herein.

### BACKGROUND OF THE INVENTION

### Field of the Invention

The disclosure relates generally to an energy saving switch device, and more particularly relates to an energy saving switch device operating based on the status of a user and an electronic apparatus.

### Description of the Related Art

Nowadays many family electric appliances have a standby mode for reducing power consumption. However, even though these family electric appliances enter the standby mode or power off mode, parts of the modules in the family electric appliance remain working in order to enable a user to reuse the family electric appliance immediately. Thus, some power is still consumed, and the energy is consumed in vain when the family electric appliance is not used for a long time. Also, a user must pull a plug out when making the power consumption of a conventional family electric appliance become zero, it is inconvenient for a use to pull the plug out every time. Thus, a convenient energy saving switch device is needed.

### BRIEF SUMMARY OF THE INVENTION

An embodiment of an energy saving switch device for an electronic apparatus is provided, comprising: a power control unit, determining whether to provide an external power to the electronic apparatus according to an external control signal; a switch unit, coupled to the power control unit and the external power, and when receiving a power off signal, electrically disconnecting the external power from the electronic apparatus; and a detection unit, detecting whether a user is inside a predetermined range when the power control unit is not providing the external power to the electronic apparatus, and generating the power off signal when the user is not inside the predetermined range.

An embodiment of an energy saving switch device for an electronic apparatus, comprising: a power control unit, determining whether to provide an external power to the electronic apparatus according to an external control signal; a switch unit, coupled to the power control unit and the external power, and when receiving a power off signal, electrically disconnecting the external power from the electronic apparatus; and a detection unit, detecting whether the external control signal has been received during a predetermined period of time when the power control unit is not providing the external power to the electronic apparatus, and generating the power off signal when the external control signal has not been received during the predetermined period of time.

An embodiment of an energy saving switch method is provided, comprising: determining whether a power control unit provides an external power to an electronic apparatus according to an external control signal; detecting whether a user is inside a predetermined range when the power control unit is not providing the external power to the electronic apparatus; generating the power off signal when the user is not inside the predetermined range; and electrically disconnecting the external power from the electronic apparatus when receiving a power off signal.

### BRIEF DESCRIPTION OF DRAWINGS

The invention will become more fully understood by referring to the following detailed description with reference to the accompanying drawings, wherein:

Fig. 1 is a block diagram illustrating an embodiment of an energy saving switch device 100; and

Fig. 2 is a flowchart of an embodiment of a method for the energy saving switch device 100 shown in Fig. 1.

### DETAILED DESCRIPTION OF THE INVENTION

The making and using of the embodiments of the present invention are discussed in detail below. It should be appreciated, however, that the embodiments provide many applicable inventive concepts that can be embodied in a wide variety of specific contexts. The specific embodiments discussed are merely illustrative of specific ways to make and use the invention, and do not limit the scope of the invention.

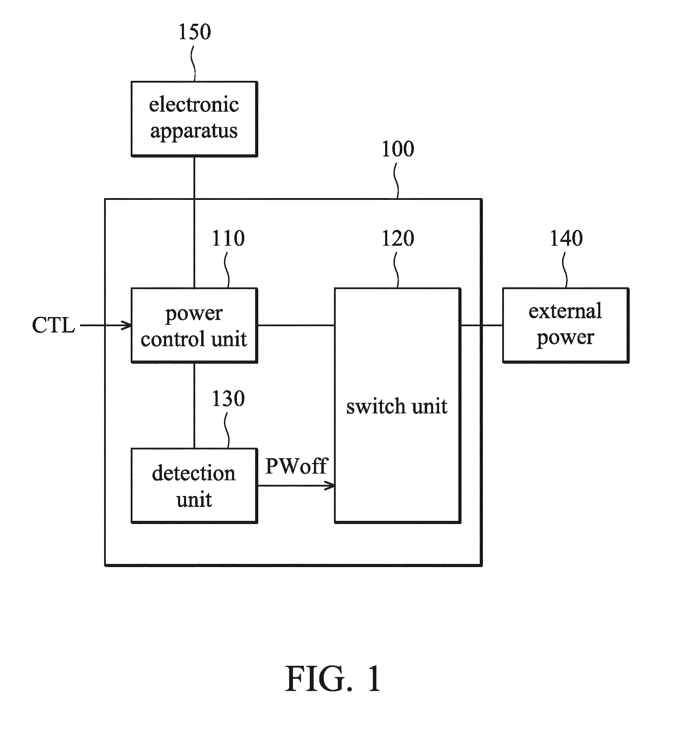

Fig. 1 is a block diagram illustrating an embodiment of an energy saving switch device 100. The energy saving switch device 100 comprises a power control unit 110, a switch unit 120 and a detection unit 130. The power control unit 110 determines whether to provide an external power 140 to an electronic apparatus 150 according to an external control signal CTL (for example, from a remote controller or a power button on the electronic apparatus 150), such that the electronic apparatus 150 (for example, a display or a television) is turned on or off accordingly. The switch unit 120 is coupled to the power control unit 110 and the external power 140 respectively, and controls the connection/disconnection between the power control unit 110 and the external power 140. When the switch unit 120 receives a power off signal PWoff, the switch unit 120 electrically disconnects the power control unit 110 from the external power 140, such that a shut down operation is performed. For example, the switch unit 120 can be a snap switch, electromagnetic switch, solid state relay, or any switch device which can physically perform electrically disconnection.

When the power control unit 110 is not providing an external power 140 to the electronic apparatus 150 (such as, in a standby mode or in a power off mode), the power control unit 110 turns on the detection unit 130 for detecting whether a user is inside the predetermined range. For example, the detection unit 130 can be an infrared sensor device, image capture device, light sensor device, electromagnetic detector device, or any detection device which can detect whether a user is inside a specific zone. The detection unit 130 generates the power off signal PWoff when there is no user inside the predetermined range, and then the switch unit 120 electrically disconnects the power control unit 110 from the external power 140 according to the power off signal PWoff. On the other hand, when the detection unit 130 detects that there is a user inside the predetermined range, the switch unit 120 keeps the power control unit 110 electrical connected to the external power 140, and the electronic apparatus 150 keeps operating in a standby mode or a power off mode.

In some embodiments, when the power control unit 110 is not providing an external power 140 to an electronic apparatus 150, the power control unit 110 turns on the detection unit 130. The detection unit 130 generates the power off signal PWoff when there is continually no user inside the predetermined range during a period of time, and then the switch unit 120 electrically disconnects the power control unit 110 from the external power 140 according to the power off signal PWoff. On the other hand, when the detection unit 130 detects that there is a user inside the predetermined range during a period of time, the switch unit 120 keeps the power control unit 110 electrical connected to the external power 140, and the electronic apparatus 150 keeps operating in a standby mode or a power off mode. Thus, power consumption is reduced, and a user does not need to take extra time to power on the apparatus repetitiously when the user merely shutdowns the apparatus temporarily.

In some embodiments, when the power control unit 110 is not providing an external power 140 to an electronic apparatus 150 (such as, in a standby mode or in a power off mode), the power control unit 110 turns on the detection unit 130. The detection unit 130 detects whether the external control signal CTL has been received. The detection unit 130 generates the power off signal PWoff when the external control signal CTL is continually not detected during a period of time, and then the switch unit 120 electrically disconnects the power control unit 110 from the external power 140 according to the power off signal PWoff. On the other hand, when the detection unit 130 detects that the external control signal CTL has been received during a period of time, the switch unit 120 keeps the power control unit 110 electrical connected to the external power 140 until the detection unit 130 does not detect the external control signal CTL during a period of time, and the electronic apparatus 150 keeps operating in a standby mode or a power off mode. Thus, power consumption is reduced, and a user does not need to take extra time to power on electrical apparatus 150 repetitiously when the user merely shutdowns the apparatus temporarily. For example, if the electrical apparatus 150 is a display, a user can use a remote controller to transmit the external control signal CTL to the power control unit 110 for turning on/off the electrical apparatus 150. After the electrical apparatus 150 shuts down, the switch unit 120 can electrically disconnect the power control unit 110 from the external power 140 if the user does not transmit the external control signal CTL during a period of time, such that power consumption is reduced. Due to the external power 140 remaining electrical connected to the electronic apparatus 150 during the period of time, the user still can use the remote controller to transmit the external control signal CTL to the power control unit 110 for turning on/off the electrical apparatus 150 during the period of time.

It should be noted, that the external power 140 provides power to the energy saving switch device 100 and the electrical apparatus 150 via the switch unit 120, and the electrical apparatus 150 further needs the power control unit 110 for obtaining the power from the external power 140. Thus, when the power control unit 110 does not provides power to the electrical apparatus 150, namely the electrical apparatus 150 turns off, the external power 140 still can provide power to the energy saving switch device 100, and the power control unit 110 can turn on the electrical apparatus 150 when the control signal is received, such that the energy saving switch device 100 remains operating. Also, when the switch unit 120 electrically disconnects the power control unit 110 from the external power 140, the energy saving switch device 100 and the electrical apparatus 150 can not obtain power, such that power consumption is zero. The user should manually turn on the switch unit 120 to electrically connect the power control unit 110 to the external power 140, when the user wants to turn on the energy saving switch device 100 and the electrical apparatus 150.

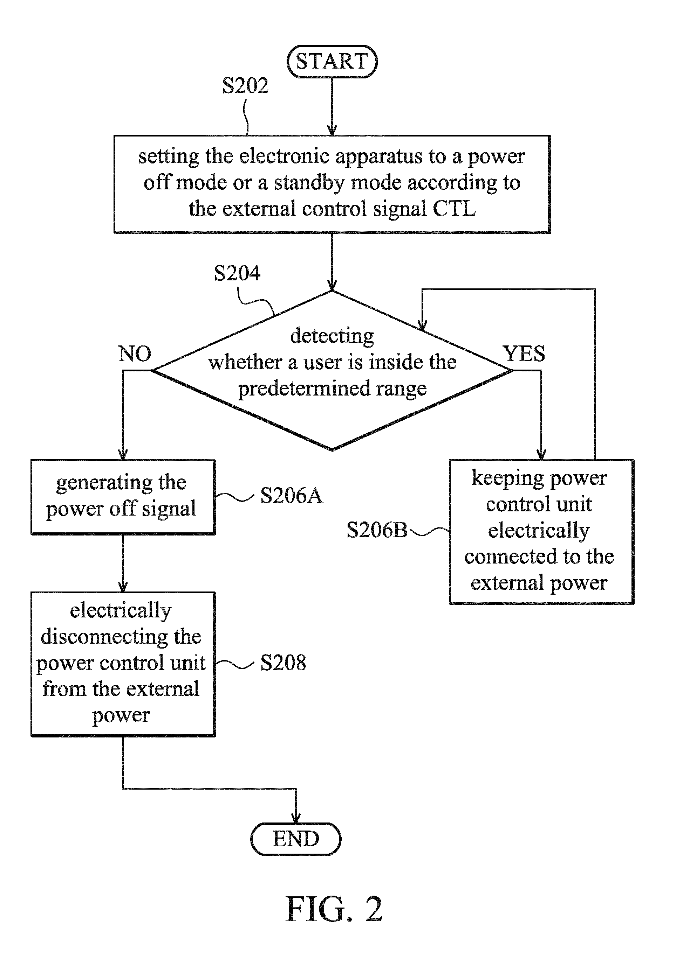

Fig. 2 is a flowchart of an embodiment of a method for the energy saving switch device 100 shown in Fig. 1. In the step S202, the power control unit 110 sets the electronic apparatus 150 to a power off mode or a standby mode according to the external control signal CTL, and does not provide the external power 140 to the electronic apparatus 150. In step S204, the detection unit 130 is turned on and detects whether a user is inside the predetermined range. When the detection unit 130 detects that there is no user inside the predetermined range, the step proceeds to step S206A. When the detection unit 130 detects that there is a user inside the predetermined range, the step proceeds to step S206B.

In step S206A, the detection unit 130 generates the power off signal PWoff. In step S208, the switch unit 120 electrically disconnects the power control unit 110 from the external power 140 according to the power off signal PWoff. In step S206B, the switch unit 120 keeps power control unit 110 electrically connected to the external power 140, and the electronic apparatus 150 keeps operating in a standby mode or a power off mode, and the step returns to step S204 for continually detecting whether a user is inside the predetermined range.

In another embodiment, in the step S204, the detection unit 130 can detect whether a user is inside the predetermined range for a predetermined period of time. When the detection unit 130 detects that there is continually no user inside the predetermined range during the predetermined period of time, the step proceeds to step S206A, otherwise the step proceeds to step S206B.

In another embodiment, in the step S204, the detection unit 130 can detect whether the external control signal CTL has been received. When the detection unit 130 continually does not detect the external control signal CTL during a predetermined period of time, the step proceeds to step S206A, otherwise the step proceeds to step S206B.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. An energy saving switch device for an electronic apparatus, comprising:
a power control unit, determining whether to provide an external power to the electronic apparatus according to an external control signal;
a switch unit, coupled to the power control unit and the external power, and when receiving a power off signal, electrically disconnecting the external power from the electronic apparatus; and
a detection unit, detecting whether a user is inside a predetermined range when the power control unit is not providing the external power to the electronic apparatus, and generating the power off signal when the user is not inside the predetermined range.

2. The energy saving switch device of claim 1, wherein the power off signal is generated when the user is not inside the predetermined range for a predetermined period of time.

3. The energy saving switch device of any preceding claim, wherein the switch unit is a snap switch, electromagnetic switch, or solid state relay.

4. The energy saving switch device of any preceding claim, wherein the detection unit is an infrared sensor device, image capture device, light sensor device, or electromagnetic detector device.

5. The energy saving switch device of any preceding claim, wherein the electronic apparatus is a display.

6. An energy saving switch device for an electronic apparatus, comprising:
a power control unit, determining whether to provide an external power to the electronic apparatus according to an external control signal;
a switch unit, coupled to the power control unit and the external power, and when receiving a power off signal, electrically disconnecting the external power from the electronic apparatus; and
a detection unit, detecting whether the external control signal has been received during a predetermined period of time when the power control unit is not providing the external power to the electronic apparatus, and generating the power off signal when the external control signal has not been received during the predetermined period of time.

7. The energy saving switch device of claim 6, wherein the switch unit is a snap switch, electromagnetic switch, or solid state relay.

8. The energy saving switch device of claims 6 or 7, wherein the electronic apparatus is a display.

9. An energy saving switch method, comprising:
determining whether a power control unit provides an external power to an electronic apparatus according to an external control signal;
detecting whether a user is inside a predetermined range when the power control unit is not providing the external power to the electronic apparatus;
generating the power off signal when the user is not inside the predetermined range; and
electrically disconnecting the external power from the electronic apparatus when receiving a power off signal.

10. The energy saving switch method of claim 9, wherein the power off signal is generated when the user is not inside the predetermined range for a predetermined period of time.

11. The energy saving switch method of claims 9 or 10, further comprising: determining whether the external control signal has been received during a predetermined period of time, wherein the power off signal is generated when the user is not inside the predetermined range and the external control signal has not been detected for a predetermined period of time.

12. The energy saving switch method of claims 9, 10, or 11, wherein the electronic apparatus is a display.
